# EUROPÄISCHE PATENTSCHRIFT

(11) **EP 0 980 618 B1**
(45) Veröffentlichungstag und Bekanntmachung des Hinweises auf die Patenterteilung: **09.11.2005**
(21) Anmeldenummer: 98932052.8
(22) Anmeldetag: 04.05.1998
(51) Int. Cl.: H04L 29/06

(54) **VORRICHTUNG ZUM ÜBERTRAGEN VON KOMMUNIKATIONSDATEN EINES RECHNERS ÜBER EIN KOMMUNIKATIONSNETZ**
DEVICE FOR TRANSFERRING COMMUNICATION DATA FROM A COMPUTER VIA A COMMUNICATION NETWORK
DISPOSITIF POUR LE TRANSFERT DE DONNEES DE TRANSMISSION D'UN ORDINATEUR PAR L'INTERMEDIAIRE D'UN RESEAU DE TRANSMISSION

(30) Priorität: 06.05.1997 DE 19719164
(43) Veröffentlichungstag der Anmeldung: 23.02.2000
(73) Patentinhaber: SIEMENS AKTIENGESELLSCHAFT, 80333 München (DE)
(72) Erfinder: MÜLLER, Wilhelm, D-85457 Wörth (DE); TAKANEN, Seppo, D-81379 München (DE)
(86) Internationale Anmeldenummer: PCT/DE1998/001225
(87) Internationale Veröffentlichungsnummer: WO 1998/051099

(56) Entgegenhaltungen:
- EP-A- 0 695 075
- GB-A- 2 283 154
- US-A- 5 682 460

## Beschreibung

Die vorliegende Erfindung betrifft eine Vorrichtung zum Übertragen von Kommunikationsdaten eines Rechners bzw. Computers über ein Kommunikationsnetz, insbesondere über ein öffentliches Telefonnetz.

Die Kommunikation und der Datenaustausch zwischen Computern hat in den letzten Jahren stark an Bedeutung gewonnen. Insbesondere aufgrund der ständig wachsenden Ausbreitung des internationalen Computer- bzw. Rechnernetzes, welches abgekürzt als "Internet" bezeichnet wird, wurde der Datenaustausch zwischen international vernetzten Computern immer wichtiger.

Das Internet ist eine Verbindung von mehreren tausend Rechnernetzen. Derzeit können etwa 40 Mio. Teilnehmer über das Internet auf über 3 Mio. Rechner zugreifen. Das Internet hat sich insbesondere aufgrund eines Dienstes etabliert, der als World Wide Web (WWW) bezeichnet wird.

Das World Wide Web erlaubt es, daß Dokumente in graphischer Form betrachtet werden können. Die Dokumente können Klang- und Videosequenzen genauso beinhalten wie Graphiken und Verbindungen zu weiteren Dokumenten. Es handelt sich also um Dokumente, die nicht nur zum Lesen geeignet sind, sondern anhand derer auch Befehle ausgeführt werden können. Durch Anklicken einer Graphik mit der Maus eines Computers kann demnach ein neues Dokument aufgerufen werden, wobei eine Verbindung zu einem gegebenenfalls Tausende von Kilometern entfernt vorhandenen Computer aufgebaut wird.

Abgesehen von dem World Wide Web werden auf dem Internet eine Vielzahl weiterer Dienste angeboten. Der bekannteste dürfte die sogenannte E-mail sein, wodurch der Versand und Empfang von elektronischer Post über das öffentliche Kommunikationsnetz, d.h. das öffentliche Telefonnetz ermöglicht wird.

Durch den Anschluß eines Rechner bzw. Personal Computers an das Internet kann der Benutzer demnach auf sämtliche anderen an das Internet angeschlossenen Rechner zugreifen sowie die auf dem einzelnen Rechner bereitgestellten Daten bzw. Dienstleistungen nutzen.

Den Zugang zu dem Internet erhält ein Benutzer über einen Zentralrechner eines Diensteanbieters (Service-Provider), wobei der Diensteanbieter den Zugang zu seinem Zentralrechner in der Regel gegen eine bestimmte Nutzungsgebühr zur Verfügung stellt. Da sich der Benutzer mit seinem Computer über das öffentliche Telefonnetz bei dem Zentralrechner einwählt, sind des weiteren die während der Kommunikationsverbindung anfallenden Telefongebühren zu entrichten.

Als Schnittstelle zwischen dem Computer und dem öffentlichen Telefonnetz dient ein analoges Modem oder eine ISDN-Karte (Integrated Services Digital Network), die in den PC (Personal Computer) einzusetzen ist. Für den ISDN-Betrieb sind auch externe Geräte bekannt, deren Aussehen dem eines Modems ähnlich sind und die - wie ein Modem - einerseits an das Telefonnetz und andererseits an eine (serielle) Schnittstelle des Computers angeschlossen werden.

In der Regel besitzt ein das Internet nutzender Benutzer lediglich eine Zugangsberechtigung eines Service-Providers. Häufig stellen jedoch die Service-Provider mehrere Telefonadressen an unterschiedlichen örtlichen Einwahlpunkten für den Benutzer zur Verfügung, so daß der Benutzer den seinem Standort am nächsten liegenden Einwahlpunkt zur Minimierung der Telefongebühren auswählen kann. Neben den Telefongebühren sind auch die an den Service-Provider zu zahlenden Nutzungsgebühren für die Zugangsberechtigung des Internets nutzungsdauer- und gegebenenfalls auch tageszeit- oder wochentagabhängig.

Häufig besitzt ein Benutzer jedoch auch mehrere Zugangsberechtigungen bei unterschiedlichen Service-Providern, so daß für den Benutzer das Bedürfnis besteht, bei jedem Zugriff auf das Internet die anfallenden Kosten zu minimieren und möglichst den billigsten Service-Provider in Anspruch zu nehmen.

Aus EP 0 695 075 A1 ist ein Verfahren zur Ermittlung der Effektivität und Effizienz von Kommunikationsmitteln bekannt, bei dem nur netztyp-, bandbreiten- und datenmengenabhängige Kosten für eine manuelle Auswahl eines Dienste- bzw. Netzanbieters berücksichtigt werden. Dies hat den Nachteil, daß eine zeitliche oder örtliche Abhängigkeit von Nutzungsgebühren, die entsprechend dem Prinzip von Angebot und Nachfrage mit einer zeitlich bzw. örtlich variierenden Netzauslastung korreliert sind, unberücksichtigt bleiben und für eine Optimierung nicht zur Verfügung stehen.

In GB 2 283 154 A ist eine Vorrichtung zur Verbindung von zwei Netzwerken über zumindest ein auswählbares Netzwerk beschrieben. Die Vorrichtung weist Mittel zum Erkennen des Typs eines zu übermittelnden Datenflusses und Mittel zur Auswahl des verbindenden Netzwerks in Abhängigkeit vom Datenfluß-Typ auf.

Der vorliegenden Erfindung liegt daher die Aufgabe zugrunde, eine Vorrichtung zum Übertragen von Kommunikationsdaten eines Rechners bzw. Computers über ein Kommunikationsnetz, insbesondere ein öffentliches Kommunikationsnetz, zu schaffen, wobei die für einen Benutzer während eines Internetzugangs anfallenden Gebühren minimiert werden.

Insbesondere liegt der vorliegenden Erfindung die Aufgabe zugrunde, eine Vorrichtung der zuvor genannten Art zu schaffen, mit der beim Einsatz mobiler Endgeräte nicht nur die durch die Zugangsnutzung eines Service-Providers anfallenden Nutzungsgebühren sondern auch die während der Kommunikationsverbindung anfallenden Nutzungsgebühren für das öffentliche Kommunikationsnetz, d.h. das öffentliche Telefonnetz, minimiert werden.

Die zuvor genannte Aufgabe wird durch eine Vorrichtung mit den Merkmalen des Anspruches 1 gelöst.

Die erfindungsgemäße Vorrichtung besitzt Speichermittel, in denen mindestens zwei verschiedene Adressen eines Service Providers oder verschiedener Service-Provider abgelegt sind, unter denen sich ein Benutzer über das öffentliche Telefonnetz in den Zentralrechner eines Service-Providers einwählen und somit auf das Internet zugreifen kann. Die vorliegende Erfindung ist jedoch nicht auf den Zugriff auf das sogenannte Internet beschränkt, sondern kann auf jedes beliebig ausgestaltete Computer- bzw. Rechnernetz angewendet werden, zu dem von bestimmten Anbietern Zugangsberechtigungen angeboten werden.

Mit dem Eingang eines Internet-Zugriffbefehls überprüfen die Auswahlmittel der erfindungsgemäßen Vorrichtung die einzelnen gespeicherten Adressen und wählen unter Berücksichtigung von für jede Adresse bereitgestellten Kostendaten die für den Benutzer kostengünstigste Zugriffsadresse aus.

Vorteilhafterweise betreffen die in den Speichermitteln abgelegten Adressen nicht nur einen Service-Provider, sondern der Benutzer besitzt Zugangsberechtigungen auf das Internet über verschiedene Service-Provider, so daß in den Speichermitteln für jeden Service-Provider mindestens eine Zugriffsadresse abgelegt ist. Neben den Adressen des öffentlichen Telefonnetzes sind zudem die entsprechenden Gebührendaten für jeden Service-Provider gespeichert, so daß die erfindungsgemäße Vorrichtung mit Eingang eines Internet-Zugriffbefehls automatisch den für den Benutzer kostengünstigsten Service-Provider sowie die kostengünstigste Adresse dieses Service-Providers auswählt.

Die erfindungsgemäße Vorrichtung kann in Form eines analogen Modems oder einer ISDN-Karte bzw. eines entsprechenden externen ISDN-Geräts realisiert sein. Daneben sind auch analoge Modemkarten bekannt, die wie eine ISDN-Karte intern in den Rechner eingebaut werden. Während die Modems analog arbeiten, sind die ISDN-Baugruppen digitale Varianten eines Modems.

Da die in den Speichermitteln der erfindungsgemäßen Vorrichtung abgelegten Internet-Adressen in der Regel unterschiedliche Zugriffsorte betreffen, so daß die bei einer Verbindung über die entsprechenden Adressen anfallenden Telefongebühren - die nicht nur verbindungszeit-, sondern auch entfernungsabhängig sind - verschieden hoch sein können, erfolgt die Auswahl des für einen Benutzer kostengünstigsten Service-Providers bzw. der kostengünstigsten Internet-Adresse nicht nur unter Berücksichtigung der von den Service-Providern jeweils erhobenen Zugangsgebühren, sondern auch der bei der Kommunikationsverbindung mit dem entsprechenden Zentralrechner anfallenden Telefongebühren. In diesem Zusammenhang sei ausdrücklich darauf hingewiesen, daß in der vorliegenden Anmeldung mit dem Begriff "Internet-Adresse" bzw. "Adresse" stets eine Telefonnummer bezeichnet wird, unter der über das öffentliche Kommunikations- bzw. Telefonnetz auf einen Zentralrechner eines Service-Providers zugegriffen werden kann, um somit eine Verbindung zu dem Internet herzustellen.

Die erfindungsgemäße Vorrichtung kann stationär in Verbindung mit dem Telefon-Festnetz eingesetzt werden.

Besonders vorteilhaft ist jedoch die Verwendung der erfindungsgemäßen Vorrichtung in einem mobilen Endgerät, d.h. beispielsweise in einem tragbaren (in der Regel als Portable oder Laptop bezeichneten) Personal Computer oder in einem mobilen Modem bzw. ISDN-Gerät, wobei das mobile Endgerät einem Benutzer zu mindestens zwei verschiedenen Mobilfunk-Anmeldungen berechtigt, die zudem unterschiedliche Kommunikationsstandards betreffen können. So ist unter der Bezeichnung "Radio Network Termination" (RNT) ein zur Mobilfunk-Datenübertragung mit Computern koppelbares Gerät bekannt. Ebenso ist denkbar, daß die erfindungsgemäße Vorrichtung ein handelsübliches Mobiltelefon umfaßt, welches an die Auswahlmittel angeschlossen und von diesen entsprechend angesteuert wird.

Derzeit sind verschiedene Mobilfunksysteme bzw. Kommunikationsstandards bekannt.

Seit 1992 ist in Westeuropa das sogenannte GSM (Global System for Mobile Communication) in Betrieb, welches sich nachfolgend auch außerhalb Westeuropas in vielen Ländern durchsetzte, wie z.B. in Australien, China, Rußland oder Singapur usw.. In Deutschland wurden für digitale GSM-Netze zwei Lizenzen vergeben, die einerseits die DeTe Mobil GmbH und andererseits die Mannesmann Mobilfunk erhielten. Bei den von den beiden Betreibern zur Verfügung gestellten GSM-Netzen handelt es sich um zwei physikalisch getrennte Mobilfunknetze mit eigenen Sendestationen. Die DeTe Mobil GmbH betreibt ihr GSM-Netz unter dem Namen "D1", während das von Mannesmann Mobilfunk betriebene GSM-Netz unter dem Namen "D2" bekannt ist. Allgemein erfolgt die digitale Datenübertragung in dem GSM-Netz von einer mobilen Station, beispielsweise einem schnurlosen Telefon oder einem Handy, zu der stationären Basisstation in einem Frequenzbereich zwischen 890 und 960 MHz. Neben den D1- und D2-Lizenzen wurde in Deutschland eine dritte Mobilfunklizenz vergeben, die das sogenannte DCS 1800-Mobilfunksystem (Digital Cellular System) betrifft. Das DCS 1800-Mobilfunksystem ist in Deutschland als "E1"-Netz seit 1994 in Betrieb und ist mit dem GSM-System bis auf den Frequenzbereich nahezu identisch, wobei das DCS 1800-System in einem Frequenzbereich um 1800 MHz arbeitet. Das DCS 1800-Mobilfunksystem wird in den USA teilweise auch als PCS (Personal Communication Services) oder in Europa als PCN (Personal Communication Network) bezeichnet.

Weitere bekannte Mobilfunksystemstandards sind der amerikanische D-AMPS-Standard (Digital Advanced Mobile Phone System), der auch als IS-54 (Interim Standard 54) bezeichnet wird. Des weiteren ist in den USA das IS-95-System geläufig. In Japan ist der JDC-Standard (Japanese Digital Cellular) bekannt, der auch als PDC-Standard (Personal Digital Cellular) bezeichnet wird.

Schließlich ist auch der DECT-Standard (Digital Enhanced Cordless Telecommunications) bekannt, bei dem es sich jedoch nicht um einen Mobilfunkstandard im eigentlichen Sinne, sondern um einen Standard für schnurlose Telefone handelt. DECT spezifiziert kein Netz für mobile Kommunikation, sondern definiert nur die Luftschnittstelle zwischen einer Basisstation und einem Mobilteil. Der DECT-Standard ist der ideale Standard innerhalb räumlich definierter Gebiete, wobei aufgrund der relativ geringen Reichweite der Basisstation (zwischen 30 und 300 m) ein flächendeckendes DECT-Netz (noch) nicht realisiert werden kann.

Die Mobilfunksysteme sind in der Regel zellular aufgebaut, d.h. die gesamte zu versorgende Fläche ist in kleinere Funkzonen, sogenannte Funkzellen unterteilt, wobei jeder Funkzelle eine Basisstation zugeordnet ist, deren Empfangsbereich auf die entsprechende Funkzelle beschränkt ist. Innerhalb einer Funkzelle kommuniziert demnach ein mobiles Endgerät stets nur mit der für die Funkzelle verantwortlichen Basisstation. Bewegt sich ein mobiles Endgerät aus dem Versorgungsbereich ihrer Basisstation heraus, muß die Verbindung über eine andere Basisstation geführt werden, wobei dies durch einen automatischen Wechsel der Funkzone erfolgt, ohne daß die Qualität der laufenden Verbindung wesentlich störend beeinflußt wird. Dieser Vorgang wird als "Handover" bezeichnet. Das PCS- bzw. PCN-System umfaßt hingegen einzelne lokale Netze, die wiederum als zellulare Netze aufgebaut sein können, wobei jedoch die einzelnen lokalen Netze durch das Festnetz miteinander verbunden sind. Die PCS- bzw. PCN-Systeme decken somit nicht die gesamte Fläche durch Funkzonen ab, sondern eine Mobilfunkübertragung erfolgt lediglich innerhalb der einzelnen lokalen Netze, während die Datenübertragung zwischen den einzelnen lokalen Netzen über das Festnetz erfolgt. Insbesondere für die amerikanischen PCS-Systeme wurde der DCS 1800-Standard zu dem DCS 1900-Standard weiterentwickelt, dessen Frequenzbereich gegenüber dem DCS 1800-Standard um 100 MHz verschoben ist.

Die zuvor beschriebenen bekannten Mobilfunkstandards unterscheiden sich abgesehen von dem Frequenzbereich in weiteren wesentlichen technischen Parametern, wie beispielsweise dem Kanalabstand, dem Multiplexverfahren, dem Modulationsverfahren oder der Anzahl der pro Trägerfrequenz vorhandenen Kanäle. Auf die einzelnen technischen Unterschiede soll jedoch an dieser Stelle nicht näher eingegangen werden.

Neben den eigentlichen Mobilfunknetzbetreibern können für jeden Mobilfunkstandard verschiedene als Service-Provider bezeichnete Dienstanbieter vorhanden sein, die Zugang zu den entsprechenden Mobilfunknetzen kaufen und die Dienste dem Endkunden gebührenpflichtig anbieten. In Deutschland existieren mehr als zehn Service-Provider, die jeweils Zugang zu den D1-, D2- und E1-Netzen gekauft haben und die Mobilfunkdienste kostenpflichtig anbieten. Der Kunde hat somit abhängig von der Reichweite der einzelnen Anbieter bzw. der einzelnen Mobilfunknetze nicht nur die Wahl zwischen unterschiedlichen Mobilfunksystemen, sondern auch innerhalb der einzelnen Mobilfunksysteme zwischen den unterschiedlichen Service-Providern. Die von den einzelnen Mobilfunknetzbetreibern bzw. Service-Providern dem Kunden in Rechnung gestellten Übertragungsgebühren (für die Nutzung des Mobilfunknetzes) und gegebenenfalls Festnetzgebühren (für die Benutzung des Festnetzes) können deutlich voneinander abweichen.

Gemäß einer bevorzugten Ausgestaltung weist somit die erfindungsgemäße Vorrichtung zudem weitere Speichermittel auf, in denen benutzerspezifische Anmeldungsdaten abgelegt sind, die mindestens zwei verschiedenen Anmeldungen entsprechen. Unter Anmeldung wird dabei eine Berechtigung eines Benutzers zur Inanspruchnahme der Dienste eines Mobilfunknetzbetreibers bzw. eines entsprechenden Service-Providers verstanden, wobei derartige Anmeldungen in der Regel gebührenpflichtig sind. Jede Anmeldung entspricht somit einem bestimmten Mobilfunknetzbetreiber bzw. einem Service-Provider sowie einem bestimmten Kommunikationsstandard der zuvor beschriebenen Kommunikationsstandards.

Die Auswahlmittel berücksichtigen somit bei der Auswahl der für den Benutzer kostengünstigsten Internet-Adresse nicht nur die für die einzelnen Internet-Service-Provider bzw.
Internet-Adressen gespeicherten Gebühren, sondern auch die für die einzelnen Mobilfunk-Anmeldungen des Benutzers bereitgestellten Gebührendaten. Auch die Gebührendaten der einzelnen Mobilfunknetzbetreiber bzw. Mobilfunk-Service-Provider sind in der Regel sowohl verbindungsdauer- als auch wochentag- oder tageszeitabhängig. Die Auswahlmittel der erfindungsgemäßen Vorrichtung können somit selbst bei Vorhandensein lediglich einer Internet-Adresse für den Benutzer eine Kostenminimierung herbeiführen, indem für diese Internet-Adresse aus sämtlichen für die Verbindung zu der Internet-Adresse geeigneten und verfügbaren Mobilfunk-Anmeldungen die billigste ausgewählt wird.

Stehen nicht nur mehrere Internet-Service-Provider mit jeweils mehreren Internet-Adressen, sondern auch mehrere Mobilfunk-Anmeldungen des Benutzers zur Verfügung, so ermitteln die Auswahlmittel die für den Benutzer kostengünstigste Internet-Adresse aufgrund einer Beurteilung sämtlicher zur Verfügung stehenden Gebührendaten.

Das heißt, die Auswahlmittel ermitteln für jede einzelne gespeicherte Internet-Adresse die für den Verbindungsaufbau geeigneten sowie verfügbaren Mobilfunk-Anmeldungen, zu deren Nutzung der Benutzer berechtigt ist. Für jede Kombination der Internet-Adressen mit den geeigneten Mobilfunk-Anmeldungen werden die zu erwartenden Verbindungs- bzw. Zugangskosten ermittelt, wobei sowohl die für den Internet-Zugang an den entsprechenden Internet-Service-Provider zu entrichtenden Gebühren als auch die für die Inanspruchnahme des entsprechenden Mobilfunknetzes an den jeweiligen Mobilfunk-Service-Provider zu entrichtenden Gebühren berücksichtigt werden. Ist für den Verbindungsaufbau zwischen dem Benutzer und der gewünschten Internet-Adresse auch die Nutzung des Festnetzes erforderlich, werden die Festnetzgebühren ebenfalls berücksichtigt.

Da diese Gebühren in der Regel von der Verbindungsdauer abhängig sind, wird zunächst bei der Ermittlung der zu erwartenden Gebühren von einem bestimmten Vorgabewert für die Verbindungsdauer, beispielsweise 15 Minuten, ausgegangen. Dieser Standard-Vorgabewert kann kontinuierlich aktualisiert werden und beispielsweise dem Mittelwert der letzten drei Verbindungsdauern entsprechen. Auf diese Weise ermitteln die Auswahlmittel der Vorrichtung die für den gewünschten Internet-Zugang des Benutzers kostengünstigste Internet-Adresse, d. h. den kostengünstigsten Internet-Service-Provider sowie die entsprechende kostengünstigste Telefonnummer des Internet-Service-Providers, um auf dessen Zentralrechner zugreifen zu können, sowie den für die Telefonverbindung zwischen dem Computer des Benutzers und dem Zentralrechner des ausgewählten Internet-Service-Providers billigsten Mobilfunk-Service-Provider bzw. die billigste Mobilfunk-Anmeldung. Der Verbindungsaufbau zwischen dem Computer und dem Zentralrechner des ausgewählten Internet-Service-Providers erfolgt anschließend durch Anwählen der entsprechenden Telefonnummer über den ausgewählten Mobilfunk- bzw. Kommunikationsstandard. Betreffen die in der Vorrichtung abgelegten Anmeldungen unterschiedliche Kommunikationsstandards, so muß für jeden dieser Kommunikationsstandards eine eigene Luftschnittstelle, d. h. eine eigene Sende- und Empfangseinheit vorgesehen sein, die die zu übertragenden Kommunikationsdaten gemäß dem den einzelnen Kommunikationsstandards eigenen technischen Eigenschaften kodiert und moduliert bzw. dekodiert und demoduliert usw.

Vorteilhafterweise werden die für die einzelnen Anmeldungen sowie die einzelnen Internet-Zugangsberechtigungen in der Vorrichtung gespeicherten Gebührendaten automatisch in regelmäßigen Abständen aktualisiert, wobei dies beispielsweise durch ein Mobilfunksignal in Form einer Abfrage bei einer zentralen Informationsstation oder über einen Internet-Zugriff bei einem entsprechenden Diensteanbieter, der sämtliche Gebührendaten zur Verfügung stellt, erfolgen kann. Insbesondere erfolgt die Aktualisierung vorteilhafterweise unbemerkt für den Benutzer.

Um die Vorrichtung auch für unterschiedliche Benutzer nutzbar zu machen, können die Internet-Adressen-Speichermittel sowie die Anmeldungsdaten-Speichermittel (welche verschiedene benutzerspezifische Mobilfunk-Anmeldungen betreffen) austauschbar sein, so daß ein Benutzer lediglich eine mit den entsprechenden Speichermitteln versehene Chipkarte in die Vorrichtung einstecken muß, um anschließend die Vorrichtung mit seinen benutzerspezifischen Internet-Zugangsberechtigungen bzw. Mobilfunk-Anmeldungen betreiben zu können.

Die einzelnen Internet-Adressendaten bzw. Mobilfunk-Anmeldungsdaten können von dem Benutzer - beispielsweise über die Tastatur des Computers - eingegeben werden. Wahlweise können diese Daten auch auf einer Anzeigenvorrichtung, beispielsweise dem Bildschirm des Computers, dargestellt werden, so daß der Benutzer eine Internet-Adresse bzw. einen Internet-Service-Provider sowie eine der zur Verfügung stehenden Mobilfunk-Anmeldungen seiner Wahl bestimmen kann, wobei dann die ausgewählten Daten von den Auswahlmitteln der Vorrichtung nicht mehr verändert werden können.

Die Unteransprüche beschreiben allgemein vorteilhafte Ausgestaltungen der zuvor beschriebenen Erfindung.

Die Erfindung wird nachfolgend anhand eines bevorzugten Ausführungsbeispiels unter Bezugnahme auf die Zeichnung näher erläutert.
Fig. 1 zeigt ein vereinfachtes Blockdiagramm eines bevorzugten Ausführungsbeispiels der vorliegenden Erfindung, und
Fig. 2 zeigt eine Darstellung zur Verdeutlichung des dem bevorzugten Ausführungsbeispiels der vorliegenden Erfindung zugrunde liegenden Prinzips.

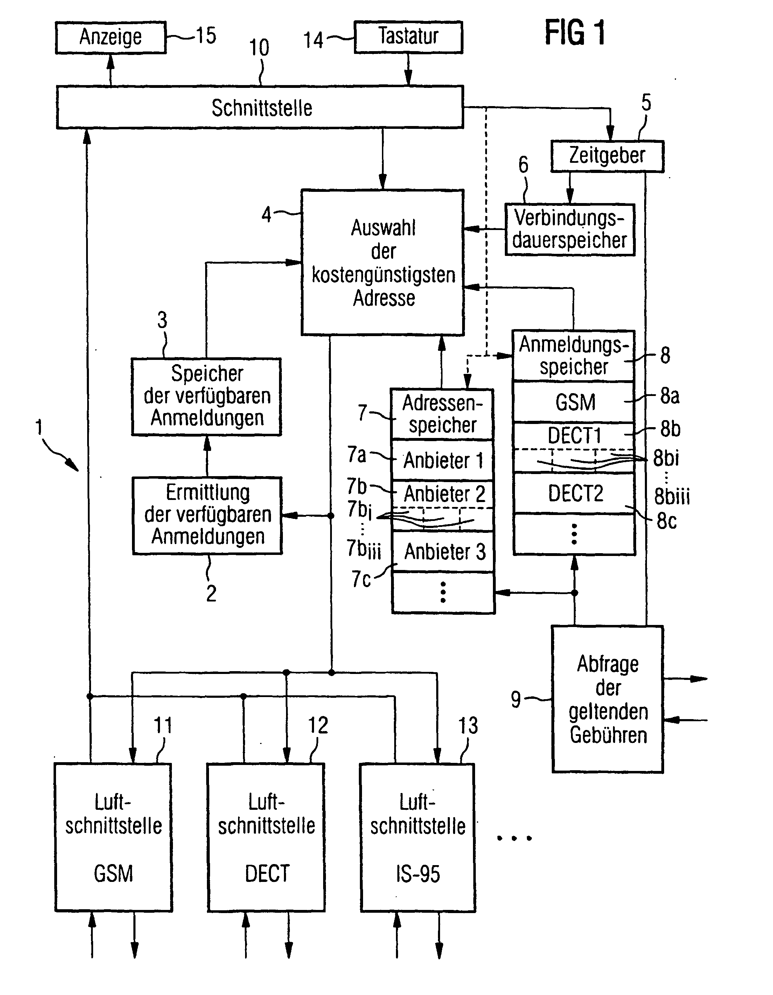

Das in Fig. 1 vereinfacht dargestellte Blockschaltbild betrifft ein bevorzugtes Ausführungsbeispiel der erfindungsgemäßen Vorrichtung, wobei die erfindungsgemäße Vorrichtung in Form eines mobilen Endgeräts realisiert ist, welches für einen bestimmten Benutzer sowohl Zugangsberechtigungen zu mehreren Internet-Service-Providern als auch zu mehreren Mobilfunk-Service-Providern besitzt. Des weiteren kann die in Fig. 1 dargestellte erfindungsgemäße Vorrichtung über mehrere Luftschnittstellen betrieben werden, d. h. die Übertragung der Kommunikationsdaten von der Vorrichtung zu dem Zentralrechner eines ausgewählten Internet-Service-Providers kann gemäß unterschiedlichen Mobilfunk-Standards erfolgen.

Ein wesentlicher Bestandteil des in Fig. 1 dargestellten Blockschaltbilds ist eine Auswahleinrichtung 4 sowie Speichereinrichtungen 7 und 8. Die Speichereinrichtungen 7 und 8 können beispielsweise in Form von Chipkarten vorgesehen sein, die somit leicht austauschbar sind, um auf diese Weise den Betrieb der in Fig. 1 dargestellten Vorrichtung durch unterschiedliche Benutzer mit den jeweils entsprechenden benutzerspezifischen Daten zu ermöglichen.

Wie bereits zuvor beschrieben worden ist, umfaßt der Adressenspeicher 7 bei dem in Fig. 1 dargestellten Ausführungsbeispiel Zugangsadressen 7a - 7c von unterschiedlichen Internet-Service-Providern, wobei - wie anhand des Anbieters 2 dargestellt ist - jeder Anbieter gegebenenfalls mehrere Adressen 7bᵢ -7bᵢᵢᵢ anbieten kann.

Der Anmeldungsspeicher 8 speichert verschiedene Mobilfunkanwendungen 8a - 8c des Benutzers. Jede dieser Anmeldungen entspricht einer Berechtigung des Benutzers, das zu der Anmeldung gehörende Mobilfunknetz betreiben bzw. den zu der Anmeldung gehörenden Mobilfunk-Service-Provider in Anspruch nehmen zu dürfen. Wie bei den Internet-Service-Providern erwirbt ein Benutzer die Benutzungsberechtigung in der Regel durch Vertragsabschluß mit dem entsprechenden Mobilfunknetz-Betreiber bzw. Mobilfunk-Service-Provider. Die in dem Speicher 8 abgelegten Mobilfunk-Anmeldungen 8a - 8c können unterschiedliche Mobilfunknetze, d. h. unterschiedliche Mobilfunkstandards betreffen, wie beispielsweise das GSM-Netz, das DCS-1800-Netz, das D-AMPS-Netz, das DECT-Netz oder das IS-95-Netz usw. Zum anderen können die Mobilfunk-Anmeldungen 8a - 8c jedoch auch verschiedenen Anmeldungen innerhalb ein und desselben Mobilfunkstandards betreffen. Da es innerhalb eines Mobilfunknetzes mehrere Service-Provider gibt, d. h. Firmen, die den Zugang zu dem entsprechenden Mobilfunknetz gekauft haben und dann die Mobilfunkdienste dem Endkunden gebührenpflichtig anbieten, sind auch innerhalb ein und desselben Mobilfunknetzes unterschiedliche Mobilfunk-Anmeldungen möglich, wobei die unterschiedlichen Mobilfunk-Anmeldungen unterschiedliche Service-Provider betreffen können. So kann beispielsweise eine Mobilfunk-Anmeldung das sogenannte D1-Netz und eine andere Anmeldung das sogenannte D2-Netz innerhalb des GSM-Mobilfunknetzes betreffen. Ebenso ist denkbar, daß die unterschiedlichen Anmeldungen dasselbe Mobilfunknetz und denselben Mobilfunk-Service-Provider betreffen, jedoch sich lediglich auf unterschiedliche Zugangsberechtigungen beziehen, da beispielsweise mit ein und demselben Mobilfunk-Service-Provider für unterschiedliche Rufnummern unterschiedliche Verträge abgeschlossen werden können, bei denen auch insbesondere unterschiedliche Gebührensätze gültig sein können. Insbesondere der DECT-GAP-Standard (Digital Enhanced Cordless Telecommunications - Generic Access Profile) erlaubt pro Gerät mehrere Anmeldungen gemäß dem DECT-Standard, wobei eine Anmeldung beispielsweise den privaten Anschluß, eine den geschäftlichen Anschluß und eine Anmeldung den in der Öffentlichkeit verwendeten Anschluß betreffen kann. Aus der obenstehenden Beschreibung ist ersichtlich, daß der Begriff "Anmeldung" in der vorliegenden Erfindung im allgemeinsten Sinne zu interpretieren ist und jeweils eine individuelle Zugangsberechtigung zu einem Mobilfunknetz oder einem Mobilfunk-Service-Provider innerhalb eines Mobilfunknetzes bezeichnet.

Bei dem in Fig. 1 gezeigten Ausführungsbeispiel umfaßt der Anmeldungsspeicher 8 drei unterschiedliche Anmeldungen 8a - 8c, wobei die Anmeldung 8a eine Zugangsberechtigung zu einem GSM-Mobilfunknetz, die Anmeldung 8b eine Zugangsberechtigung zu einem ersten DECT-Mobilfunknetz und die Anmeldung 8c eine Zugangsberechtigung zu einem zweiten DECT-Mobilfunknetz bezeichnet. In dem Anmeldungsspeicher 8 können weitere Anmeldungen vorgesehen sein, die beispielsweise in den U.S.A. die Mobilfunkstandards D-AMPS oder IS-95 betreffen können.

Die in Fig. 1 dargestellte Anmeldung 8b, die das erste DECT-Mobilfunknetz betrifft, ist in drei Unterkennungen 8bᵢ - 8bᵢᵢᵢ unterteilt. Diese Unterkennungen oder Unteranmeldungen betreffen - wie bereits oben beschrieben worden ist - unterschiedliche Zugangsberechtigungen innerhalb ein und desselben DECT-1-Netzes, die sich beispielsweise auf einen privaten Anschluß, einen Geschäftsanschluß oder einen in der Öffentlichkeit verwendeten Anschluß des Mobilfunkteilnehmers beziehen können. In diesem Fall kann eine Korrektur der von der Auswahleinrichtung 4 ausgewählten Internet-Telefonnummer, d. h. der von der in Fig. 1 dargestellten Vorrichtung anzuwählenden Zielrufnummer, erforderlich sein. Sollte nämlich die für den kostengünstigsten Internet-Zugriff von der Auswahleinrichtung 4 ausgewählte Anmeldung der in dem Speicher 8 abgelegten Anmeldungen eine Unteranmeldung für einen Anschluß über eine Telefon-Nebenstellenanlage betreffen, muß die Auswahleinrichtung 4 die vorgegebene Zielrufnummer um die Amtskennzahl, in der Regel "0", erweitern, um von der Nebenstellenanlage nach außen telefonieren zu können.

Für die in den Speichern 7 bzw. 8 gespeicherten Internet-Service-Provider sowie deren Internet-Adressen bzw. Mobilfunk-Service-Provider sowie deren gegebenenfalls vorhandenen Unteranmeldungen sind jeweils die entsprechend gültigen Gebührendaten bzw. Gebührensätze gespeichert.

Die Betriebsweise der in Fig. 1 dargestellten erfindungsgemäßen mobilen Vorrichtung zum Übertragen von Kommunikationsdaten eines Computers bzw. Rechners über das öffentliche Telefon- bzw. Kommunikationsnetz ist wie folgt:

Die in Fig. 1 gezeigte Vorrichtung ist über eine Schnittstelle 10, insbesondere über eine serielle Schnittstelle, mit einem Personal Computer (PC) gekoppelt bzw. darin integriert. Ein Benutzer gibt über eine Tastatur 14 bzw. über vergleichbare Eingabemittel wie beispielsweise eine Maus, einen Befehl zum Anwählen des Internets, der über die Schnittstelle 10 der Auswahleinrichtung 4 zugeführt wird. Die Auswahleinrichtung 4 greift demzufolge auf die in den Speichern 7 und 8 abgelegten Adressen- bzw. Anmeldungsdaten sowie die ebenfalls darin abgelegten entsprechenden Gebührendaten zu. Für jede in dem Speicher 7 abgelegte mögliche Internet-Zieladresse überprüft die Auswahleinrichtung 4, welche in dem Speicher 8 definierten Anmeldungen bzw. Unteranmeldungen für die Telefonverbindung zu der entsprechenden Internet-Adresse in Frage kommen und zur Verfügung stehen.

Die in dem Speicher 7 abgelegten Internet-Zieladressen umfassen auch die entsprechende Vorwahlnummer bzw. Ortsnetzkennzahl, so daß die Auswahleinrichtung 4 anhand der in dem Speicher 7 abgelegten Internet-Zieladressen bzw. der entsprechenden Zielrufnummern auf den Standort des entsprechenden anzuwählenden Zentralrechners des jeweiligen Internet-Service-Providers schließen kann. Um für den Verbindungsaufbau mit den in dem Speicher 7 abgelegten Internet-Zieladressen bzw. Zieltelefonnummern die kostengünstigste Anmeldung der in dem Speicher 8 abgelegten Anmeldungen zu ermitteln, ist es zunächst erforderlich, die von der in Fig. 1 gezeigten Vorrichtung zu dem anzuwählenden Zentralrechner führende Übertragungsstrecke eindeutig festlegen zu können. Zu diesem Zweck ist neben dem Standort des Zielgeräts die Ermittlung der an dem Standort der in Fig. 1 gezeigten mobilen Vorrichtung 1 zugreifbaren, d. h. verfügbaren Mobilfunk-Service-Provider erforderlich. Dies geschieht durch die in den entsprechenden Radiostandards festgelegten Prozeduren mit Hilfe einer Ermittlungseinheit 2, die über die einzelnen in der Vorrichtung vorgesehenen Luftschnittstellen 11, 12 bzw. 13 die am Aufenthaltsort des Mobilfunkteilnehmers verfügbaren Anmeldungen, d. h. die Mobilfunknetz-Betreiber und/oder Mobil-Service-Provider, ermittelt und in einem Speicher 3 ablegt, der laufend aktualisiert wird. Durch Zugriff auf den Speicher 3 ist die Auswahleinrichtung 4 stets darüber informiert, welche in dem Speicher 8 abgelegten Anmeldungen tatsächlich für die Verbindung mit den über die einzelnen in dem Speicher 7 gespeicherten Internet-Adressen anzuwählenden Internet-Service-Provider in Frage kommen.

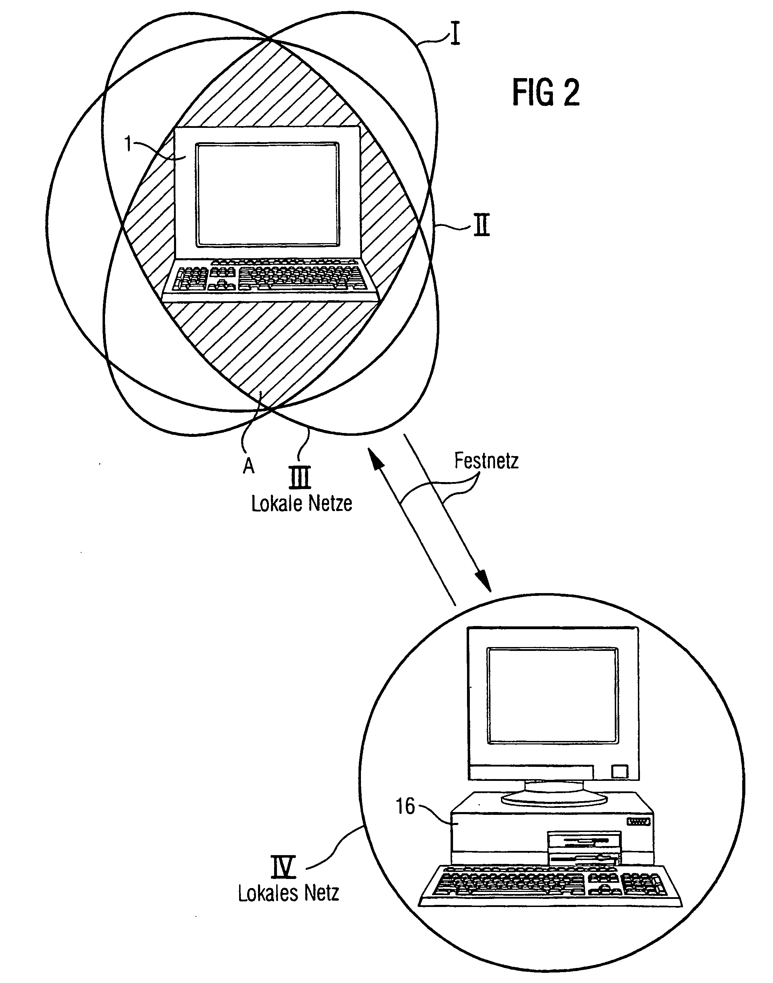

Dies soll nachfolgend anhand Fig. 2 näher erläutert werden. Fig. 2 zeigt beispielhaft die räumliche Reichweite von drei unterschiedlichen Mobilfunknetzen I - III, die sich räumlich in dem schraffiert dargestellten Bereich A überschneiden, in dem sich ein mit der in Fig. 1 gezeigten erfindungsgemäßen Vorrichtung ausgestatteter tragbarer Computer bzw. Laptop befindet. In diesem schraffiert dargestellten Bereich A hat demnach der Mobilfunkteilnehmer die Auswahl zwischen jedem dieser drei Mobilfunknetze I - III. Das in Fig. 2 dargestellte Beispiel zeigt ein amerikanisches PCS-System, bei dem die lokalen Netze I - III über ein Festnetz mit einem lokalen Netz IV verbunden sind, in dessen Einzugsbereich ein anzuwählender Zentralrechner 16 eines Internet-Service-Providers befindlich ist. Der die erfindungsgemäße Vorrichtung 1 benutzende Mobilfunkteilnehmer muß demnach zunächst eine Verbindung von der erfindungsgemäßen mobilen Vorrichtung zu der entsprechenden Basisstation des von ihm gewählten Mobilfunknetzes aufbauen, so daß anschließend die zu übertragenden Kommunikationsdaten von der Basisstation über das Festnetz zu der für das lokale Netz IV zuständigen Basisstation übertragen werden können, um die Verbindung zwischen der Vorrichtung 1 und dem Zentralrechner 16 herzustellen. Der Anrufer muß dabei zum einen die Übertragungsgebühren für die Verbindung zwischen der mobilen Vorrichtung 1 und der Basisstation, d. h. die Übertragungsgebühren für die Inanspruchnahme des entsprechenden Mobilfunknetzes, die Telefongebühren für die Übertragung über das Festnetz sowie die Zugangsgebühren für die Inanspruchnahme des Internetzugangs des Zentralrechners 16 zahlen. Selbstverständlich kann der Zentralrechner auch direkt an das Festnetz angeschlossen sein. Da in Westeuropa die GSM-Netze flächendeckend ausgestaltet sind, ist eine Übertragung der Kommunikationsdaten über das Festnetz nicht erforderlich, so daß in diesem Fall keine Gebühren für die Festnetzübertragung anfallen.

Die für die einzelnen Internet-Zieladressen bzw. Mobilfunk-Anmeldungen gültigen Gebührendaten sind ebenfalls in den Speichern 7 und 8 abgelegt und werden auf diese Weise der Auswahleinrichtung 4 zur Verfügung gestellt. Sollte für den Verbindungsaufbau mit dem den einzelnen Internet-Zieladressen zugeordneten Zentralrechnern auch eine Datenübertragung über das Festnetz erforderlich sein (vgl. Fig. 2), muß der Auswahleinrichtung 4 auf ähnliche Weise der geltende Gebührensatz des oder der Festnetzbetreiber mitgeteilt werden. Da sich erfahrungsgemäß die Gebührensätze der Internet-Service-Provider bzw. der Mobilfunknetzbetreiber sowie der Mobilfunk-Service-Provider von Zeit zu Zeit verändern, aktualisiert eine entsprechend vorgesehene Aktualisierungseinrichtung 9, die von einem internen Zeitgeber 5, beispielsweise einem Oszillator, angesteuert wird, in regelmäßigen Abständen die Gebührendaten der Speicher 7 und 8.

So kann beispielsweise die Aktualisierungseinrichtung 9 eine für den Benutzer nicht wahrnehmbare Verbindung an eine zentrale Informationsstation oder einen Internet-Diensteanbieter aufbauen, welche die jeweils geltenden Gebührensätze sämtlicher Internet-Service-Provider sowie Mobilfunk-Service-Provider zur Verfügung stellt und infolge eines entsprechenden Anfragesignals an die Aktualisierungseinrichtung 9 überträgt, die daraufhin die aktuellen Gebührendaten in den Speichern 7 und 8 ablegt.

Die Auswahleinrichtung 4 kann für jede Kombination der in dem Speicher 7 abgelegten Internet-Adressen mit den an dem Standort der Vorrichtung 1 verfügbaren Anmeldungen des Speichers 8, wobei die verfügbaren Anmeldungen in dem Speicher 3 abgelegt sind, die zur erwartenden Übertragungs- bzw. Internet-Nutzungskosten ermitteln. Da jedoch diese Kosten in der Regel von der Übertragungszeit, d. h. von der Verbindungsdauer, abhängig sind, muß die Auswahleinrichtung 4 bei der Ermittlung des kostengünstigsten Internet-Service-Providers bzw. Mobilfunk-Service-Providers von einem vorgegebenen Verbindungsdauerwert ausgehen. Zu diesem Zweck kann in einem entsprechend vorgesehenen Speicher 6 ein Standardwert, d. h. ein Defaultwert gespeichert sein, der der Ermittlung bzw. Auswahl durch die Auswahleinrichtung 4 standardmäßig zugrunde gelegt wird. Alternativ kann der Benutzer über die Tastatur 14 der Auswahleinrichtung 4 die zu erwartende Verbindungsdauer mitteilen. Ebenso ist denkbar, daß der Inhalt des Verbindungsdauerspeichers 6 kontinuierlich aufgrund der zuletzt aufgebauten Verbindungen mitlernt und ständig seinen Inhalt aktualisiert, indem beispielsweise als Standardwert für eine neue Kommunikationsverbindung stets der Mittelwert der beispielsweise letzten drei Verbindungen gespeichert wird. Selbstverständlich kann der Mittelwert auch aus einer größeren oder kleineren Anzahl von zurückliegenden Verbindungen ermittelt werden.

Aufgrund der zuvor genannten Informationen kann die Auswahleinrichtung 4 nunmehr den für den gewünschten Internet-Zugriff kostengünstigsten Internet-Service-Provider bzw. dessen kostengünstigste Internet-Adresse sowie die für den Verbindungsaufbau mit dem Zentralrechner des Internet-Service-Providers kostengünstigste Mobilfunk-Anmeldung des Speichers 8 ermitteln, um auf diese Weise für den Benutzer die mit dem Zugriff auf das Internet verbundenen Gesamtkosten bzw. Gesamtgebühren zu minimieren.

Nach Auswahl der den minimierten Gesamtkosten entsprechenden Internet-Adresse bzw. Zieltelefonnummer des Speichers 7 und Mobilfunk-Anmeldung des Speichers 8 steuert die Auswahleinrichtung 4 abhängig von dem der ausgewählten Mobilfunk-Anmeldung des Speichers 8 entsprechenden Mobilfunkstandard die für diesen Mobilfunkstandard vorgesehene Sende- und Empfangseinheit an. Bei dem in Fig. 1 gezeigten Ausführungsbeispiel sind entsprechend den in dem Speicher 8 gespeicherten Anmeldungen 8a - 8c Sende- und Empfangseinheiten bzw. Luftschnittstellen 11 und 12 für die Mobilfunkstandards GSM und DECT vorgesehen. Sollen mit der mobilen Vorrichtung 1 Kommunikationsdaten auch gemäß anderer Mobilfunkstandards übertragen werden, müssen entsprechend zusätzliche Sende- und Empfangseinheiten vorhanden sein. So ist in Fig. 1 beispielsweise zusätzlich für den IS-95-Standard eine Luftschnittstelle 13 vorgesehen. Durch Ansteuern der der ausgewählten Mobilfunk-Anmeldung entsprechenden Luftschnittstelle wählt die Auswahleinrichtung 4 die von ihr ebenfalls ausgewählte Internet-Adresse eines entsprechenden Internet-Service-Providers an und baut somit die Kommunikationsverbindung zur Übertragung der von dem Computer erzeugten Daten mit dem entsprechenden Zentralrechner auf. Die über diesen Verbindungsweg übertragenen Kommunikationsdaten werden von der durch die Auswahleinrichtung 4 aktivierten Luftschnittstelle 11, 12 bzw. 13 entsprechend den technischen Daten des jeweiligen Mobilfunkstandards kodiert, moduliert und an die entsprechende Basisstation übertragen. Auf ähnliche Weise werden die von dem angewählten Zentralrechner abgesendeten Kommunikationsdaten von der jeweiligen Luftschnittstelle 11, 12 bzw. 13 empfangen, dekodiert, demoduliert und über die Schnittstelle 10 der Zentraleinheit des Computers zugeführt, wobei die empfangenen Daten auf dem Bildschirm 1 des Computers dargestellt werden können.

Während einer Verbindung kann der Fall auftreten, daß sich die Gesamt-Verbindungskosten aufgrund einer Standortveränderung der mobilen Vorrichtung 1 und/oder der Überschreitung der zunächst angenommenen Verbindungsdaten derart verändern, daß eine andere zur Verfügung stehende Mobilfunk-Anmeldung des Speichers 8 kostengünstiger ist als die von der Auswahleinrichtung 4 zunächst ausgewählte Mobilfunk-Anmeldung. Daher ermittelt die Einrichtung 2 vorteilhafterweise kontinuierlich die am Standort des Benutzers verfügbaren Anmeldungen und die Auswahleinrichtung 4 überwacht mit Hilfe des Speichers 6 sowie dem internen Zeitgeber 5 die aktuelle Verbindungsdauer und berechnet ständig den für die bestehende Internet-Verbindung für sämtliche verfügbare Anmeldungen theoretisch anfallenden Gebühren. Sollte eine der in dem Speicher 3 gespeicherten derzeit verfügbaren bzw. zugreifbaren Mobilfunk-Anmeldungen billiger werden als die für die Anwahl der bei der kostengünstigsten Internet-Verbindung ausgewählten Internet-Adresse des Speichers 7, gibt die Auswahleinrichtung 4 ein entsprechendes Warnsignal aus. Der Benutzer kann anschließend - beispielsweise über die Tastatur 14 - bestätigen, daß er einen Wechsel der Mobilfunk-Anmeldung wünscht. In diesem Fall veranlaßt die Auswahleinrichtung 4 einen sogenannten "Transfer-Call", wobei die Auswahleinrichtung 4 über diejenige Luftschnittstelle 11 - 13, die der neuen kostengünstigsten Mobilfunk-Anmeldung entspricht, an eine entsprechende Basisstation des der neuen Mobilfunk-Anmeldung entsprechenden Mobilfunknetzes ein Anfragesignal zur Übernahme der bestehenden Internet-Verbindung gesendet wird. Nach Vorliegen einer Bestätigung von dieser Basisstation kann die Verbindung über die neue Luftschnittstelle aufgebaut werden, wobei erst nach Vorliegen der neuen Übertragungsverbindung die alte Übertragungsverbindung unterbrochen, d. h. die der alten zunächst ausgewählten Mobilfunk-Anmeldung entsprechende Luftschnittstelle wird von der Auswahleinrichtung 4 deaktiviert.

Anhand Fig. 1 wurde ein bevorzugtes Ausführungsbeispiel der erfindungsgemäßen Vorrichtung in Form eines mobilen Endgeräts beschrieben. Der in Fig. 1 dargestellte Aufbau vereinfacht sich entsprechend für eine über das Telefon-Festnetz betriebene Vorrichtung, da in diesem Fall die mit den verschiedenen Mobilfunkstandards verbundenen Bestandteile der in Fig. 1 gezeigten Vorrichtung, wie insbesondere der Speicher 8, entfallen. Des weiteren ist dann nur eine Telefon-Schnittstelle erforderlich, die die von dem Computer an das Telefonnetz zu übertragenden Daten kodiert und moduliert bzw. die ankommenden Daten dekodiert und demoduliert.

## Patentansprüche

1. Vorrichtung (1) zum Übertragen von Kommunikationsdaten eines Rechners über ein Kommunikationsnetz mit
- Adressendaten-Speichermitteln (7) zum Speichern von Adressendaten, die mindestens zwei verschiedene Adressen (7bᵢ - 7bᵢᵢᵢ) umfassen, unter denen ein Benutzer zum Zugang zu einem Rechnernetz berechtigt ist,
- mit Kostendaten-Speichermitteln zum Speichern von Kostendaten (7, 8), **gekennzeichnet durch**:
- Auswahlmittel (4) zum Auswählen der kostengünstigsten Adresse des Kommunikationsnetzes aus den Adressendaten abhängig von für jede Adresse gespeicherte Kostendaten unter Berücksichtigung verbindungszeit- und/oder entfernungsabhängiger Gebühren und
- mindestens einer Sende- und Empfangseinheit (11 - 13) zum Aufbauen einer Kommunikationsverbindung mit der von den Auswahlmitteln ausgewählten Adresse, über die die Kommunikationsdaten zu übertragen sind.

2. Vorrichtung nach Anspruch 1,
**dadurch gekennzeichnet,**
**daß** die in den Adressendaten-Speichermitteln (7) gespeicherten Adressendaten Zugangsberechtigungen zu dem Internet dar stellen.

3. Vorrichtung nach Anspruch 1,
**gekennzeichnet durch**
Schnittstellenmittel (10), über die die Vorrichtung mit dem Rechner, dessen Kommunikationsdaten zu übertragen sind, koppelbar ist.

4. Vorrichtung nach Anspruch 3,
**dadurch gekennzeichnet,**
**daß** die Vorrichtung in einen Rechner eingebaut oder daran an geschlossen ist.

5. Vorrichtung nach Anspruch 1,
**dadurch gekennzeichnet,**
**daß** die für jede Adresse (7bᵢ - 7bᵢᵢᵢ) bereitgestellten Kostendaten Gebühren für die Nutzung des Kommunikationsnetzes umfassen.

6. Vorrichtung nach Anspruch 1,
**dadurch gekennzeichnet,**
**daß** die Adressendaten Adressen (7bᵢ - 7bᵢᵢᵢ) von mindestens zwei verschiedenen Anbietern (7a - 7c) umfassen, die jeweils einen Zugang zu dem Rechnernetz bereitstellen, wobei die für jede Adresse bereitgestellten Kostendaten in den Adressendaten-Speichermitteln (7) gespeichert sind und anbieterspezifische Nutzungsgebühren für den Zugang zu dem Rechnernetz umfassen.

7. Vorrichtung nach Anspruch 6,
**dadurch gekennzeichnet,**
**daß** die Adressendaten für mindestens einen Anbieter (7b) zwei verschiedene diesem Anbieter zugeordnete Adressen (7bᵢ - 7bᵢᵢᵢ) umfassen, und
**daß** die Auswahlmittel (4) zur Auswahl des für den Zugang zu dem Rechnernetz kostengünstigsten Anbieter sowie der diesem Anbieter zugeordneten kostengünstigsten Adresse ausgestaltet sind.

8. Vorrichtung nach Anspruch 1,
**gekennzeichnet durch**
Eingabemittel (14) zum benutzerspezifischen Eingeben und Speichern der Adressendaten in den Adressendaten-Speicher mitteln (7).

9. Vorrichtung nach Anspruch 1,
**gekennzeichnet durch**
eine Aktualisierungseinheit (9), die zur in regelmäßigen Ab ständen erfolgenden Aktualisierung der in den Adressendaten-Speichermitteln (7) gespeicherten, den einzelnen Adressen zu geordneten Kostendaten ausgestaltet ist.

10. Vorrichtung nach Anspruch 1,
**gekennzeichnet durch**
Anmeldungsdaten-Speichermittel (8) zum Speichern von Anmeldungsdaten, die mindestens zwei verschiedenen Anmeldungen (8a - 8c) entsprechen, wobei jede Anmeldung dem Benutzer zur Übertragung der Kommunikationsdaten gemäß dem der Anmeldung entsprechenden Kommunikationsstandard berechtigt,
wobei die Auswahlmittel (4) zur Auswahl der kostengünstigsten Adresse unter Berücksichtigung von für jede Anmeldung gespeicherten Kostendaten sowie der kostengünstigsten Anmeldung zum Übertragen der Kommunikationsdaten über das Kommunikationsnetz ausgestaltet sind.

11. Vorrichtung nach Anspruch 10,
**dadurch gekennzeichnet,**
**daß** die Vorrichtung zur Übertragung der Kommunikationsdaten gemäß mindestens zwei verschiedenen Kommunikationsstandards vorgesehen ist und jeweils eine Sende- und Empfangseinheit (11 - 13) für jeden vorgesehenen Kommunikationsstandard auf weist.

12. Vorrichtung nach Anspruch 10,
**dadurch gekennzeichnet,**
**daß** die Adressendaten-Speichermittel (7) sowie die Anmeldungsdaten (8) für sich gesehen austauschbar sind.

13. Vorrichtung nach Anspruch 9 und 10,
**dadurch gekennzeichnet,**
**daß** die Aktualisierungseinheit (9) zur in regelmäßigen Abständen erfolgenden, zusätzlichen Aktualisierung der in den Anmeldungsdaten-Speichermitteln (8) gespeicherten, den einzelnen Anmeldungen (8a - 8c) zugeordneten Kostendaten ausgestaltet ist.

14. Vorrichtung nach Anspruch 13,
**dadurch gekennzeichnet,**
**daß** die Aktualisierungseinheit (9) zur regelmäßigen Abfrage der für die gespeicherten Adressen (7a - 7c) sowie die gespeicherten Anmeldungen (8a - 8c) jeweils gültigen Gebührensätze über ein Mobilfunksignal bei einer Informationsstation oder über das Rechnernetz und zu deren Speicherung als Kostendaten in den Adressendaten-Speichermitteln (7) bzw. den Anmeldungsdaten-Speichermitteln (8) ausgestaltet ist.

15. Vorrichtung nach Anspruch 10,
**gekennzeichnet durch**
Eingabemittel (14) zum benutzerspezifischen Eingeben und Speichern der Anmeldungsdaten in den Anmeldungsdaten-Speichermitteln (8).

16. Vorrichtung nach Anspruch 10,
**gekennzeichnet durch**
eine Einrichtung (2) zum Feststellen der an dem Standort der Vorrichtung tatsächlich verfügbaren Anmeldungen der in den Anmeldungsdaten-Speichermitteln (8) gespeicherten Anmeldungen (8a - 8c).

17. Vorrichtung nach Anspruch 16,
**gekennzeichnet durch**
einen Anmeldungsspeicher (3), in dem kontinuierlich aktualisierte, augenblicklich tatsächlich verfügbare Anmeldungen gespeichert sind.

18. Vorrichtung nach Anspruch 16,
**dadurch gekennzeichnet,**
**daß** die Auswahlmittel (4) zur Auswahl der kostengünstigsten Adresse unter Berücksichtigung der den an dem Standort der Vorrichtung verfügbaren Anmeldungen entsprechenden Kostendaten, welche anmeldungsspezifische Mobilfunkgebühren und Festnetzgebühren umfassen, ausgestaltet sind.

19. Vorrichtung nach Anspruch 1,
**dadurch gekennzeichnet,**
**daß** die Auswahlmittel (4) zur Auswahl der kostengünstigsten Adresse abhängig von einer zu erwartenden Kommunikationsdauer ausgestaltet sind.

20. Vorrichtung nach Anspruch 19,
**dadurch gekennzeichnet,**
**daß** die zu erwartende Kommunikationsdauer einem kontinuierlich erneuerten Mittelwert einer bestimmten Anzahl von Kommunikationsdauern von zurückliegenden Kommunikationsverbindungen entspricht.

21. Vorrichtung nach Anspruch 10,
**dadurch gekennzeichnet,**
**daß** die gespeicherten Adressendaten und die Anmeldungsdaten auf einer Anzeigeneinrichtung (15) dargestellt werden, wobei Eingabemittel (14) vorgesehen sind, um benutzerspezifisch den Auswahlmitteln (4) eine bestimmte der gespeicherten Adressen (7a - 7c) und/oder eine bestimmte der gespeicherten Anmeldungen (8a - 8c) vorzugeben.

22. Vorrichtung nach Anspruch 10,
**dadurch gekennzeichnet,**
**daß** die mindestens eine Sende- und Empfangseinheit (11 - 13) Bestandteil eines Mobilfunktelefons ist, welches an die Aus wahlmittel (4) anzuschließen ist.

## Claims

1. Device (1) for transmission of communication data of a computer over a communication network with
- Address data storage means (7) for storing address data which comprises at least two different addresses (7bᵢ - 7bᵢᵢᵢ,) under which a user is authorized to access a computer network,
- Cost data storage means for storing cost data (7, 8), **characterized by**:
- Selection means (4) for selecting the lowest-cost address of the communication network from the address data depending on cost data stored for each address, taking account of call duration and/or distance-dependent charges and
- at least one transceiver unit (11 - 13) for establishing a communication connection with the address selected by the selection means via which the communication data is to be transmitted.

2. Device in accordance with claim 1,
**characterized in that**
the address data stored in the address data storage means (7) represents access authorizations to the Internet.

3. Device in accordance with claim 1,
**characterized by**
Interface means (10) via which the device can be linked to the computer of which the communication data is to be transmitted.

4. Device in accordance with claim 3,
**characterized in that**
the device is built into a computer or connected to it.

5. Device in accordance with claim 1,
**characterized in that**
the cost data provided for each address (7b_{I} - 7bᵢᵢᵢ) includes charges for the use of the communication network.

6. Device in accordance with claim 1,
**characterized in that**
the address data includes addresses (7b_{I} - 7bᵢᵢᵢ) of at least two different providers (7a - 7c) who each provide an access to the computer network, with a the cost data provided for each address being stored in the address data storage means (7) and including provider-specific usage charges for access to a computer network.

7. Device in accordance with claim 6,
**characterized in that**
the address data for at least one provider (7b) includes two different addresses (7b_{I} - 7bᵢᵢᵢ) assigned to this provider, and the selection means (4) is designed for selecting the lowest-cost provider for access to the computer network as well as for selecting the lowest-cost address assigned to this provider.

8. Device in accordance with claim 1,
**characterized by**
Input means (14) for user-specific entry and storage of the address data in the address data storage means (7).

9. Device in accordance with claim 1,
**characterized by**
an updating unit (9) which is designed for regular updating of the cost data assigned to the individual addresses stored in the address data storage means (7).

10. Device in accordance with claim 1,
**characterized by**
Registration data storage means (8) for storing registration data which corresponds to at least two different registrations (8a - 8c), with each registration authorizing the user for transmission of the communication data in accordance with the registration,
where the selection means (4) are embodied to select the lowest-cost address taking into account cost data stored for each registration stored as well as the lowest-cost registration for transmission of the communication data over the communication network.

11. Device in accordance with claim 10,
**characterized in that**
the device is provided for transmission the communication data in accordance with at least two different communication standards and features a transceiver unit (11 - 13) for each communication standard provided in each case.

12. Device in accordance with claim 10,
**characterized in that**
the address data storage means (7) as well as the registration data (8) are exchangeable per se.

13. Device in accordance with claim 9 and 10,
**characterized in that**
the updating unit (9) is embodied for additional updating, occurring at regular intervals, of the cost data stored in the registration data storage means (8) assigned to the individual registrations (8a - 8c).

14. Device in accordance with claim 13,
**characterized in that**
the updating unit (9) is embodied for regularly requesting the charge rates valid for the stored addresses (7a - 7c) as well as the stored registrations (8a - 8c) in each case via a mobile radio signal from an information station or via the computer network and for its storage as cost data in the address data storage means (7) or the registration data storage means (8).

15. Device in accordance with claim 10,
**characterized by**
entry means (14) for user-specific entry and storage of the registration data in the registration data storage means (8).

16. Device in accordance with claim 10,
**characterized by**
a device (2) for establishing the registrations actually available from the registrations (8a - 8c) stored in the registration data-storage means (8) at the location of the device.

17. Device in accordance with claim 16,
**characterized by**
a registration memory (3) in which continuously updated, currently actually available registrations are stored.

18. Device in accordance with claim 16,
**characterized in that**
the selection means(4) are embodied for selection of the lowest-cost address taking into account the cost data corresponding to the registrations available at the location of the device, which includes registration-specific mobile radio charges and fixed network charges.

19. Device in accordance with claim 1,
**characterized in that**
the selection means (4) are embodied for selecting the lowest-cost address depending on the duration of communication to be expected.

20. Device in accordance with claim 19,
**characterized in that**
the duration of communication to be expected corresponds to a continuously renewed average value of a specific number of communication durations of previous communication connections.

21. Device in accordance with claim 10,
**characterized in that**
the stored address data and the registration data are shown on a display (15), with input means being provided (14) in order to specify user-specifically to the selection means (4) a specific address of the stored addresses (7a - 7c) and/or a specific registration of the stored registrations (8a - 8c).

22. Device in accordance with claim 10,
**characterized in that**
the at least one transceiver unit (11 - 13) is a component of a mobile telephone which is to be connected to the selection means (4).

## Revendications

1. Dispositif (1) pour le transfert de données de communication d'un ordinateur par l'intermédiaire d'un réseau de communication, comprenant
- des moyens de stockage de données d'adresses (7) pour stocker des données d'adresses qui comprennent au moins deux adresses différentes (7bᵢ - 7bᵢᵢᵢ) sous lesquelles un utilisateur est autorisé à accéder à un réseau d'ordinateurs,
- des moyens de stockage de données de coûts pour stocker des données de coûts (7, 8),
**caractérisé par :**
- des moyens de sélection (4) pour sélectionner parmi les données d'adresses l'adresse la plus avantageuse du réseau de communication en fonction des données de coûts stockées pour chaque adresse, en tenant compte des taxes liées au temps de connexion et/ou à la distance, et
- au moins une unité d'émission et de réception (11 - 13) pour établir une liaison de communication avec l'adresse sélectionnée par les moyens de sélection, adresse par l'intermédiaire de laquelle les données de communication sont à transférer.

2. Dispositif selon la revendication 1,
**caractérisé en ce que**
les données d'adresses stockées dans les moyens de stockage de données d'adresse (7) représentent des autorisations d'accès à l'Internet.

3. Dispositif selon la revendication 1,
**caractérisé par**
des moyens d'interface (10) par l'intermédiaire desquels le dispositif peut être couplé à l'ordinateur dont les données de communication sont à transférer.

4. Dispositif selon la revendication 3,
**caractérisé en ce que**
le dispositif est monté dans un ordinateur ou raccordé à celui-ci.

5. Dispositif selon la revendication 1,
**caractérisé en ce que**
les données de coûts fournies pour chaque adresse (7bᵢ - 7bᵢᵢᵢ) comprennent des taxes pour l'utilisation du réseau de communication.

6. Dispositif selon la revendication 1,
**caractérisé en ce que**
les données d'adresses comprennent des adresses (7bᵢ - 7bᵢᵢᵢ) d'au moins deux fournisseurs différents (7a - 7c) fournissant chacun un accès au réseau d'ordinateurs, les données de coûts fournies pour chaque adresse étant stockées dans les moyens de stockage de données d'adresses (7) et comprenant des taxes d'utilisation spécifiques à chaque fournisseur pour l'accès au réseau d'ordinateurs.

7. Dispositif selon la revendication 6,
**caractérisé en ce que**
les données d'adresses pour au moins un fournisseur (7b) comprennent deux adresses différentes (7bᵢ - 7bᵢᵢᵢ) attribuées à ce fournisseur, et
**en ce que** les moyens de sélection (4) sont configurés pour sélectionner le fournisseur le plus avantageux pour l'accès au réseau d'ordinateurs et pour sélectionner l'adresse la plus avantageuse attribuée à ce fournisseur.

8. Dispositif selon la revendication 1,
**caractérisé par**
des moyens d'introduction (14) pour introduire et stocker, par l'utilisateur, les données d'adresses dans les moyens de stockage de données d'adresses (7).

9. Dispositif selon la revendication 1,
**caractérisé par**
une unité d'actualisation (9) configurée pour actualiser, à intervalles réguliers, les données de coûts stockées dans les moyens de stockage de données d'adresses (7) et attribuées aux différentes adresses.

10. Dispositif selon la revendication 1,
**caractérisé par**
des moyens de stockage de données de souscription (8) pour stocker des données de souscription correspondant à au moins deux souscriptions différentes (8a - 8c), chaque souscription autorisant l'utilisateur à transférer les données de communication selon le standard de communication correspondant à la souscription,
les moyens de sélection (4) étant configurés pour sélectionner l'adresse la plus avantageuse en tenant compte des données de coûts stockées pour chaque souscription, et pour sélectionner la souscription la plus avantageuse pour transférer les données de communication par l'intermédiaire du réseau de communication.

11. Dispositif selon la revendication 10,
**caractérisé en ce que**
le dispositif est prévu pour transférer les données de communication selon au moins deux standards de communication différents et qu'il comprend une unité d'émission et de réception (11 - 13) pour chaque standard de communication prévu.

12. Dispositif selon la revendication 10,
**caractérisé en ce que**
les moyens de stockage de données d'adresses (7) ainsi que les données de souscription (8), vus séparément, sont échangeables.

13. Dispositif selon les revendications 9 et 10,
**caractérisé en ce que**
l'unité d'actualisation (9) est configurée pour actualiser, à intervalles réguliers, aussi les données de coûts stockées dans les moyens de stockage de données de souscription (8) et attribuées aux différentes souscriptions (8a - 8c).

14. Dispositif selon la revendication 13,
**caractérisé en ce que**
l'unité d'actualisation (9) est configurée pour interroger régulièrement, par l'intermédiaire d'un signal de téléphonie mobile auprès d'une station d'informations ou par l'intermédiaire du réseau d'ordinateurs, les taux des taxes en vigueur pour les adresses stockées (7a - 7c) et les souscriptions stockées (8a - 8c) et pour stocker ceux-ci en tant que données de coûts dans les moyens de stockage de données d'adresses (7) resp. les moyens de stockage de données de souscription (8).

15. Dispositif selon la revendication 10,
**caractérisé par**
des moyens d'introduction (14) pour introduire et stocker, par l'utilisateur, les données de souscription dans les moyens de stockage de données de souscription (8).

16. Dispositif selon la revendication 10,
**caractérisé par**
un dispositif (2) pour identifier parmi les souscriptions (8a - 8c) stockées dans les moyens de stockage de données de souscription (8) les souscriptions effectivement disponibles à l'emplacement du dispositif.

17. Dispositif selon la revendication 16,
**caractérisé par**
une mémoire de souscriptions (3) dans laquelle sont stockées les souscriptions actualisées en continu et effectivement disponibles à l'instant.

18. Dispositif selon la revendication 16,
**caractérisé en ce que**
les moyens de sélection (4) sont configurés pour sélectionner l'adresse la plus avantageuse en tenant compte des données de coûts correspondant aux souscriptions disponibles à l'emplacement du dispositif, lesquelles données de coûts comprennent des taxes de téléphonie mobile et des taxes de réseau fixe spécifiques à chaque souscription.

19. Dispositif selon la revendication 1,
**caractérisé en ce que**
les moyens de sélection (4) sont configurés pour sélectionner l'adresse la plus avantageuse en fonction d'une durée de communication escomptée.

20. Dispositif selon la revendication 19,
**caractérisé en ce que**
la durée de communication escomptée correspond à une moyenne, renouvelée en continu, d'un nombre déterminé de durées de communication de liaisons de communication antérieures.

21. Dispositif selon la revendication 10,
**caractérisé en ce que**
les données d'adresses stockées et les données de souscription sont représentées sur un dispositif d'affichage (15), des moyens d'introduction (14) étant prévus pour imposer aux moyens de sélection (4), par l'utilisateur, une adresse distincte parmi les adresses stockées (7a - 7c) et/ou une souscription distincte parmi les souscriptions stockées (8a - 8c).

22. Dispositif selon la revendication 10,
**caractérisé en ce que**
ladite au moins une unité d'émission et de réception (11 - 13) fait partie intégrante d'un téléphone mobile à raccorder aux moyens de sélection (4).
